Europäisches Patentamt

European Patent Office

Office européen des brevets

(11) Publication number: **0 126 655**
**A2**

# EUROPEAN PATENT APPLICATION

(21) Application number: **84303519.7**

(22) Date of filing: **24.05.84**

(51) Int. Cl.³: **B 01 D 33/36**

(30) Priority: **24.05.83 US 497588**

(43) Date of publication of application: **28.11.84**
**Bulletin 84/48**

(84) Designated Contracting States: **BE DE FR GB NL SE**

(71) Applicant: **DORR-OLIVER INCORPORATED, 77, Havemeyer Lane, Stamford Connecticut 06904 (US)**

(72) Inventor: **Willus, Charles Arthur, 2 Joan Drive, Newtown CT 06470 (US)**
Inventor: **Spilkin, Gordon, 69 Maple Tree Avenue, Stamford CT 06906 (US)**
Inventor: **Kosonen, Vaino Juhani, 16 Apple Lane, West Redding CT 06986 (US)**

(74) Representative: **Boon, Graham Anthony et al, Elkington and Fife High Holborn House 52/54 High Holborn, London, WC1V 6SH (GB)**

(54) Vacuum expressor device for rotary drum filter.

(57) A vacuum expressor device for a rotary drum vacuum filter (10) comprises an impermeable press belt membrane (35) mounted on a roll (21, 22) assembly atop the filter and adapted to be drawn into contact with the filter cake (15) by the vacuum within the filter drum (11) during the filtration cycle. The roll assembly (20) is mounted on the filter by a plurality of pneumatic actuators (39) for providing means for moving the press belt (35) towards or away from the filter drum (11).

- 1 -

VACUUM EXPRESSOR DEVICE FOR A ROTARY DRUM FILTER

The present invention is directed to new and useful improvements in rotary vacuum drum filters and more particularly to vacuum expression means and method for dewatering and compressing filter cake.

Rotary vacuum drum filters are well known and have many industrial and municipal uses. For example, in the municipal area such filters have been used to process sewage sludge and in the pulp and paper industry such filters are used for brownstock washing and to filter and wash pulp slurries. The filters generally comprise a cylindrical drum mounted for rotation in a tank containing a slurry solution. A filter media such as a filter cloth is provided about the drum and as the drum is rotated through a filtration cycle a vacuum is maintained inside the drum during a portion of the cycle whereby a filter cake is formed on the surface of the filter media. As the drum ascends from the tank the filtrate is drawn into suitable filtrate compartments in the drum by the applied vacuum.

In brownstock washing systems as the filter drum ascends from the tank a spray wash is applied to the surface of the cake to effect a washing thereof. The dewatering of the cake is accomplished through the next segment of the cycle of drum rotation. The vacuum to the filtrate compartment is interrupted by appropriate valve means and the filter cake is removed from the surface of the filter media by a suitable doctoring device as the drum descends again into the tank.

In filters of this type it is generally required that the cake be substantially dewatered or dried prior to removal by the doctoring device and further that the dried

- 2 -                                    0126655

cake be of uniform consistency. In the past various auxiliary means such as press rollers or belts have been utilized to assist the dewatering function and to increase filter cake consistency as the internal vacuum of the drum is applied to the cake prior to discharge. In U.S. Patent No. 1,377,765 to J. W. Elling, for example, a water tight belt is suspended over idler rollers and is brought into contact with the filter cake by the action of air pressure upon the water tight belt to squeeze water out of the pulp layer into a rotating drum. Other type devices are disclosed in U.S. Patent No. 2,371,417 to A. Wright and in U.S. Patent No. 2,713,022 to S. H. Dole et al where the filter cake is compressed by overlaying the cake on the filter medium with a compression member such as an endless belt or cords suspended by rollers above the filter drum. Other patents which disclose compression type belt members applied to filter cakes are for example found in such patents as U.S. Patent No. 2,094,863; 2,197,610 and 2,202,932.

Although these known structures and other similar devices may have been successful for their intended uses, they include relatively complex mechanisms for mounting the belt members on the filter which require excessive areas of use and compression contact with the filter cake. As a result vacuum losses occur in the filtration cycle which leads to passage of air through the filter cake with respect to highly compressible material or in other instances leads to premature cracking of the filter cake. As will be appreciated in those instances of use such as filtering pulp slurries where air begins to pass through the cake the effective vacuum from the drum is lessened and the drying of the cake is adversely affected. Further, air passage is greatest through thin spots prematurely formed in the cake with the thicker areas of the cake retaining a higher moisture content.

It is the object of the present invention to provide a novel vacuum expressor device for assisting in the dewatering of filter cake and improving the consistency of the discharged cake.

It is a further object to provide a novel press type expressor belt which is brought into contact with the filter cake by the applied vacuum within the filter drum.

Another object is to provide an air tight expressor device which includes novel means for mounting the device on the outer surface of a rotary drum filter requiring a minimum area of operation.

Another object is to provide novel press belt expressor means whereby the entire area of the filter cake passing under the belt is contacted by the expression means and is subjected to equal pressure so as to dry to approximately the same uniform moisture content.

It is still another object to provide means to reduce filter cake cracking during the filtration dewatering cycle of a vacuum drum filter in certain processes and in other uses to limit air passage through the cake to increase cake consistency.

The present invention contemplates a novel vacuum expressor device for a rotary drum filter comprising an endless impervious membrane belt mounted about spaced elongated rolls which extend horizontally across the top of the filter drum. Means are provided for detachably mounting the rolls and belt to the filter housing and include brackets at each side of the housing interconnected by an elongated bar member. Sprockets are mounted at opposite ends of the belt rolls and are connected to an adjacent bracket. Each pair of sprockets are interconnected by chain members to which the side edges of the expressor belt are attached. As the drum rotates beneath the belt the belt is drawn to the surface of the filter cake by the vacuum pulling air or liquid through the cake. The belt is moved

- 4 - 0126655

by adherence of the belt to the cake until the cake moves clear of the belt where it is sucked dry by the applied vacuum prior to removal from the filter media by appropriate doctor means.

The above and other objects and advantages of the present invention will appear more fully hereinafter from a consideration of the detailed description which follows taken together with the accompanying drawings wherein one embodiment of the invention is illustrated.

In the Drawings:

FIG. 1 is a perspective view of a rotary drum filter having the novel expressor device mounted thereon;

FIG. 2 is a side elevational view of the expressor device as seen from the right side of the filter in FIG. 1;

FIG. 3 is a sectional view taken on the line 3-3 of FIG. 2;

FIG. 4 is a sectional view taken on the line 4-4 of FIG. 2; and

FIG. 5 is a diagrammatic view of the expression device in contact with the upper portion of the filter drum.

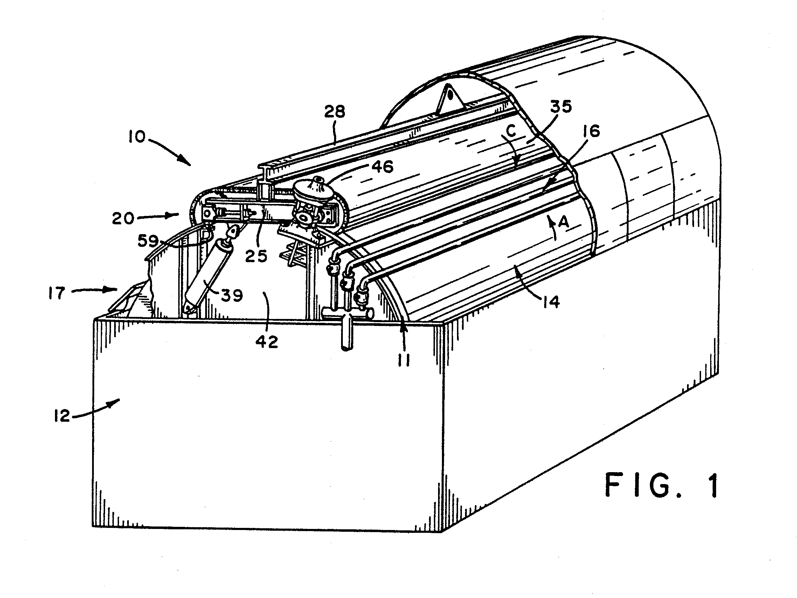

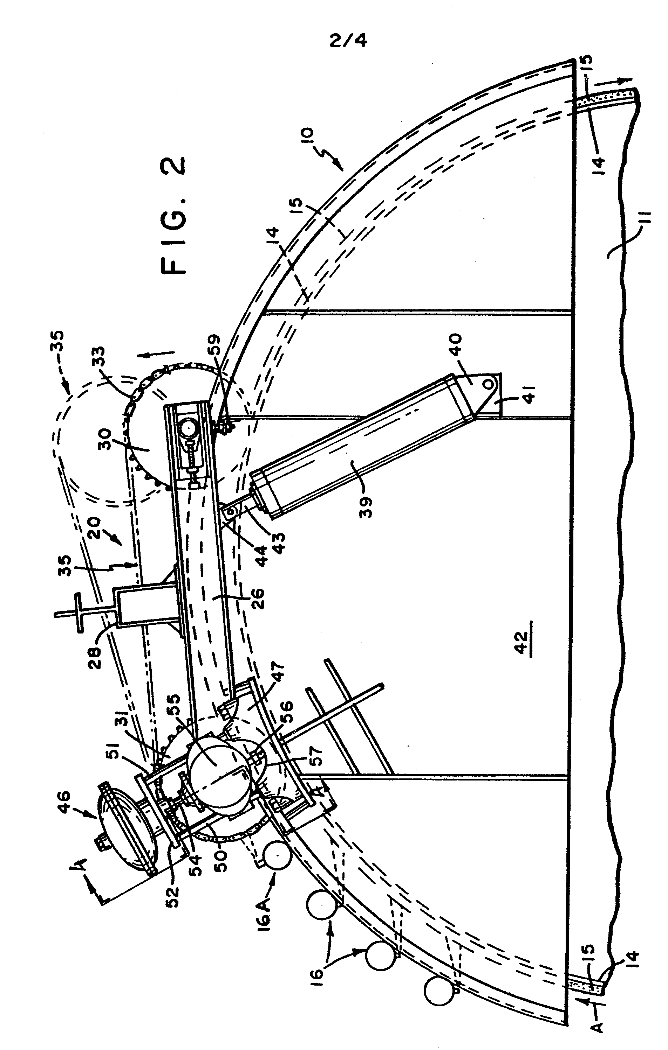

Referring now to the drawings for a more detailed description of the present invention a rotary vacuum drum filter which comprises a pulp washing unit incorporating an embodiment of the present invention is generally indicated by the reference numeral 10 in FIGS. 1 and 2. Filter 10 includes a cylindrical drum 11 mounted for rotation in a tank 12 containing a pulp slurry. Drum 10 is provided with a plurality of filtrate compartments (not shown) about the outer wall surface thereof.

A filter media such as a filter cloth 14 is provided about drum 10. In operation of filter 10 a liquid pulp slurry is fed to tank 12 and drum 11 is rotated in the direction designated by the arrow A in FIG. 1. A vacuum is applied to the filtrate compartments within drum 11 to effect a suction through filter cloth 14 as drum 11 ascends from tank 12 whereby a filter cake 15 adheres to the surface of filter cloth 14 as the filtrate is drawn into the filtrate compartment for removal from the filter through suitable valves.

As drum 11 ascends from tank 12 in a brownstock washing system a spray assembly 16 is provided for applying liquid wash to the filter cake 15 in a well known manner. As drum 11 rotates past spray assembly 16 towards a descending path a valve assembly (not shown) is operated in a usual manner to interrupt the vacuum to permit removal of the filter cake 15 from the filter cloth 14 by a doctoring device 17 partially shown in FIG. 1.

It is to be understood that the structure thus far described refers to conventional structure as found in known rotary drum vacuum filters and that the present invention which is to be hereinafter described in further detail is not limited to the particular filter shown. The drawings having been simplified to show only conventional parts of filter 10 as being necessary for a clear understanding of the present invention.

As mentioned it is a feature of the present invention to provide novel expressor means for assisting in the further dewatering of the filter cake 15 and to improve the consistency of the cake prior to removal from filter media 14 by doctoring device 17. To this end an expressor device generally indicated by the reference numeral 20 in FIGS. 1 and 2 is mounted as a detachable unit on filter 10 intermediate spray assembly 16 and doctor device 17 in the applied vacuum cycle of drum 11.

Expressor device 20 includes two spaced and parallel elongated roll members 21 and 22 which extend horizontally across the top of drum 11. The opposite ends of each roll 21 or 22 are provided with stub shafts 23-24 which are suitably mounted for rotation in spaced brackets 25 and 26 at opposite end walls of tank 12 as shown with respect to one end wall 27 in FIG. 1. Brackets 25 and 26 are interconnected by an elongated bar member 28 which extends across top of filter 10 intermediate rolls 21 and 22. It is to be understood that the means for mounting rolls 21 and 22 and brackets 25 and 26 are identical at each end wall 27 of filter 10 and the description hereinafter set forth is directed to filter end wall 27 as viewed from the right in FIG. 1 with like reference numerals used to identify corresponding identical parts at each end of expressor device 20.

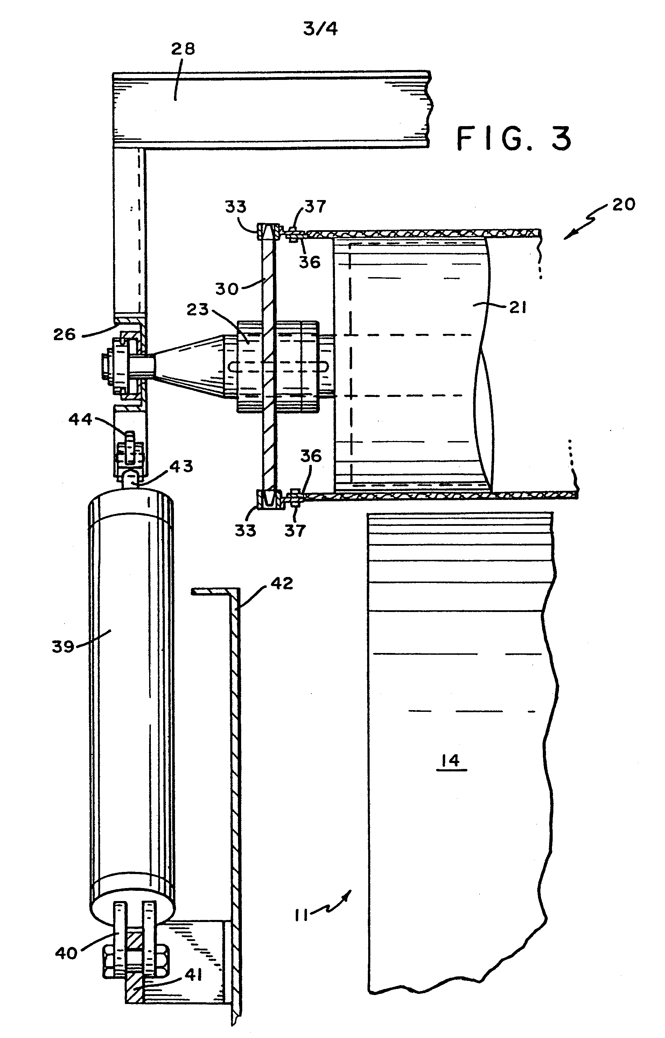

As seen in FIGS 2-4 sprocket wheels 30-31 are mounted on stub shafts 23-24 intermediate rolls 21-22 and bracket 26. An endless chain 33 is wound about in mesh with sprockets 30 and 31 to interconnect rolls 21 and 22 for common movement. An air tight press belt 35 comprising an endless impermeable membrane sheet member made from a suitable material such as a polyvinyl elastomeric material is wound about rolls 21 and 22 and has opposite parallel end edges 36 interconnected to chain 33 by connecting pins 37 (FIG. 3).

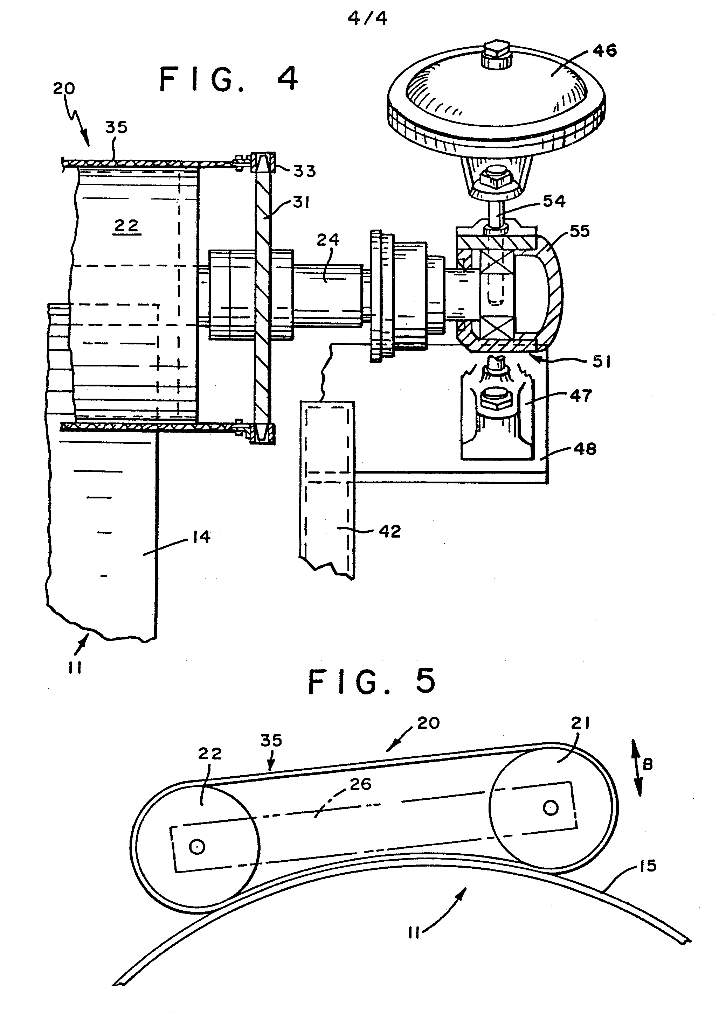

Expressor device 20 is mounted on filter 10 for movement towards and away from drum 11 by means of a pneumatic hydraulic lifting assembly which comprises a pneumatic cylindrical actuator 39 having one end 40 pivotally attached to a flange 41 provided on an arcuate shaped end panel 42 of filter 20. The projecting piston end of piston 43 is pivotally connected to a boss 44 at the bottom of bracket 26 (FIG. 2). A second pneumatic actuator comprising a diaphragm type actuator 46 (FIGS. 2 and 4) is mounted on a guide bracket 47 attached to a flange support 48 secured to end panel 42 adjacent the end of roll 22. As seen in FIGS. 2 and 4 bracket 47 on which actuator 46 is mounted includes spaced legs 50 and 51. Actuator 46 is mounted on an interconnecting member 52 with piston 54 thereof extending downward therefrom and interconnected to the end of stub shaft 24. The end of shaft 24 is mounted in a housing 55 which is movable on legs 50 and 51 of bracket 47.

An adjustable stop member comprised of an adjustable nut 56 is mounted in the bite portion 57 of bracket 47 for limiting the downward movement of piston 54 and which in turn limits the downward movement of roll 22. Similar stop means are provided for roll 21 and include a threaded fastening and nut member 59 secured to panel 42 to engage and limit the downward movement of bracket 26. In this manner the distance of belt 35 from the surface of drum 11 is readily predetermined through adjustment of stops 56-59.

Cylindrical actuators 39 and diaphragm actuators 46 are connected to a suitable pneumatic source (not shown) whereby pistons 43 and 54 may be reciprocated to move expressor brackets 25-26 in the directions of arrow B (FIG. 5) to move roll 22 upward and away from filter drum 11. As diaphragm actuator 46 is operated piston 54 moves housing 55 up or down on guide legs 50-51 to move roll 22 toward or away from drum 11. Stop means 56 and 57 are so adjusted that expressor belt 35 is adapted to engage the surface of filter cake 15 but will not engage filter cloth 14. The pneumatic source may be connected to any suitable control means for selecting timing and sequence of operation of pistons 43 and 54 to operate either in unison or individually in accordance with the needs of the user to provide suitable clearance between expressor 20 and drum 11 for changing or clearing belt 35 or filter cloth 14.

In operation of expressor device 20 as filter drum 10 is rotated in the direction of arrow A and filter cake 15 is adhered to the surface of filter cloth 14 as vacuum is applied to the filtrate compartments the filter cake arises from tank 12 and is washed or flooded by spray assembly 16 and passes under compression press belt membrane 35. As seen in FIG. 2 an additional spray head 16A may provide additional flooding to cake 15 as it passes under belt 35. The vacuum applied from internally of drum 11 through the filter cake 15 causes membrane 35 to be drawn to and uniformly engage the outer surface of filter cake 15. As drum 11 rotates the cake 15 adheres to the undersurface of belt membrane 35 to move rolls 21-22 and sprocket assembly 30-31 in the direction of arrow C (FIG. 1) with the cake until the cake passes roll 21 whereat it is either sucked dry by the continued application of vacuum as it leaves belt membrane 35 or removed immediately thereafter. Suitable valves will then interrupt the vacuum before or at doctoring device 17 whereat the cake 15 is removed from the filter cloth 14 in a usual manner.

In one laboratory testing of the disclosed expressor device a 3' diameter by 1/2' pilot drum was utilized to wash hardwood pulp of 657 CSF freeness at 20°C. Conditions were 3.3 RPM; 8" Hg vacuum; 1.1% feed consistency at a rate of 3.4 lbs/min. The cake was flooded immediately ahead of the expression belt to about 10% consistency. After 1.8 seconds of expression (36° rotation) and 1.9 seconds of subsequent drying, the discharge consistency was 22.9%. This can be extrapolated to the equivalent to 0.54 TPD/FT$^2$ at the same consistency on commercial equipment.

In another laboratory test using the same pilot drum filter newsprint of 310 CSF freeness at 20°C was used. Conditions were 2.1 RPM; 15" Hg vacuum; 0.78% feed consistency at a rate of 0.76 lbs/min. The cake was flooded immediately ahead of the expression belt to about 10% consistency. After 2.8 seconds of expression (36°) and 3.0 seconds of subsequent drying, the discharge consistency was 20.2%. This is equivalent to 0.12 TPD/FT$^2$ at the same discharge consistency on commercial equipment.

It will be apparent to those skilled in the art that the above described expressor device 20 has many advantages in use. Among other advantages expressor belt 35 is adapted to cover the entire surface of the filter cake which it engages to provide an air tight compression of the cake in a manner to diminish air passage through the cake and provide more uniform thickness of the cake. As a result cake consistency is improved and the dewatering of the cake greatly enhanced. The novel means for mounting expressor device 20 on the filter 10 permits for retrofitting of existing filters with the device. The novel hydraulic actuator mounting permits for ready and efficient access to the expressor belt 35 or filter media 14 for cleaning or replacement of parts.

Although one embodiment of the present invention has been illustrated and described in detail it is to be understood that the invention is not limited thereto. Various changes can be made in the spirit and scope of the invention as the same will now be understood by those skilled in the art.

CLAIMS

1. A vacuum expressor device for a rotary drum vacuum filter comprising a press belt comprised of a sheet of impermeable material suspended over a portion of the filter drum, means for mounting said sheet material a predetermined distance from the surface of the filter drum, and said material arranged to engage the surface of the filter cake in an air tight position on the surface of said filter cake upon application of vacuum from within said filter to the drum surface.

2. The device of Claim 1 wherein said mounting means for said material include a pair of elongated rolls extending across and spaced from said drum surface, and wherein said press belt is wound about said rolls.

3. The device of Claim 2 wherein said mounting means further include a pair of brackets at opposite end walls of said filter, said rolls having opposite end portions carried by and rotatably mounted in said brackets.

4. The device of Claim 3 wherein sprockets are provided on said ends of said rolls intermediate said roll and said bracket, endless chains interconnecting said sprockets at each side of said filter and means interconnecting the side edges of said belt to said chains to cause said sprockets and rolls to move in unison with said expressor belt upon contact thereof with the filter cake.

5. The device of Claim 2 wherein actuator means are interconnected to said filter and to said bracket and operable to move said expressor belt toward and away from said drum surface.

6. The device of Claim 5 wherein said actuator means include pneumatic actuators having reciprocable pistons and means connecting said pistons to said brackets to pivot said press belt toward or away from said filter drum.

- 11 -

0126655

7. The device of Claim 5 wherein adjustable stop means are provided for limiting the movement of said actuators to control the position of said rolls relative to said drum surface.

8. The device of Claim 5 wherein an elongated bar member is provided intermediate said rolls and having opposite ends connected to said brackets at each side of the said filter.

9. The device of Claim 5 wherein said pneumatic actuator means comprise a cylindrical actuator and diaphragm actuator mounted on each bracket of said expressor device.

10. A vacuum expressor assembly for a rotary drum vacuum filter having a drum adapted for rotation in an ascending and descending path into and out of slurry tank and wherein an internal vacuum is applied to the drum surface during a portion of the filtration cycle thereof, said expressor assembly comprising a pair of elongated rolls extending across the top of the filter drum and spaced from the surface thereof, a press belt comprised of a sheet of impermeable material wound about said rolls and spaced a predetermined distance from said drum surface, support means at opposite sides of said filter for supporting said rolls for rotation, and said belt adapted to engage filter cake on the surface of said drum upon application of said vacuum to filter cake on said drum.

11. The device of Claim 10 wherein said belt and rollers are adapted for movement in unison upon engagement of said belt with said filter cake to rotate in a direction opposite to said drum.

12. The device of Claim 11 where spray means are provided adjacent one roll for cleaning said belt and flooding said cake.

13. The device of Claim 10 wherein actuator means are interconnected to said filter and to said mounting means for said rolls for moving said press belt and rolls toward and away from said drum surface.

14.    The device of Claim 13 wherein said actuating means include a hydraulic actuator assembly at each side of said filter connected to said rolls and said filter and wherein stop means are provided for limiting the movement of said rolls towards and away from said drum surface.

15.    A method of filtration of a pulp slurry comprising the steps of feeding the slurry to a filtration tank having a movable filter media therein, moving said media through said slurry, applying a vacuum to said filter media to remove liquid solids from said slurry and form a filter cake on the filter media, moving said cake through a spray apparatus to flood the cake, applying an impermeable air tight sheet material to the surface of said filter cake immediately after flooding and as vacuum is applied thereto and thereafter removing the cake from the filter media.

16.    A method of washing and filtration comprising the steps of feeding a slurry to a filtration tank having a rotary drum rotatable therein, rotating said drum through said slurry, applying vacuum to said drum to remove liquid solids from said slurry to the surface of said drum to form a filter cake thereon, rotating said filter cake through a wash spray to flood said cake, applying an impermeable air tight sheet material to the surface of said filter cake immediately after said flooding thereof and as vacuum is applied thereto and thereafter removing said cake from said filter drum.

1/4

FIG. 1

FIG. 2

2/4

0126655

0126655

FIG. 3

FIG. 4

FIG. 5